(19) Europäisches Patentamt
European Patent Office
Office européen des brevets

(11) Veröffentlichungsnummer: **0 676 427 A2**

# (12) EUROPÄISCHE PATENTANMELDUNG

(21) Anmeldenummer: **95104284.5**

(51) Int. Cl.$^6$: **C08G 18/06**, C09J 175/04

(22) Anmeldetag: **23.03.95**

(30) Priorität: **05.04.94 DE 4411666**

(43) Veröffentlichungstag der Anmeldung:
**11.10.95 Patentblatt 95/41**

(84) Benannte Vertragsstaaten:
**DE FR GB IT**

(71) Anmelder: **BAYER AG**
**D-51368 Leverkusen (DE)**

(72) Erfinder: **Trinks, Rainer, Dr.**
**Am Schierort 17**
**D-41539 Dormagen (DE)**
Erfinder: **Stepanski, Horst, Dr.**
**Rolandstrasse 22**
**D-51381 Leverkusen (DE)**
Erfinder: **Colinas-Martinez, José**
**Berliner Strasse 41**
**D-42929 Wermelskirchen (DE)**
Erfinder: **Ganster, Otto, Dr.**
**Droste-Hülshoff-Strasse 5**
**D-51519 Odenthal (DE)**

## (54) Im Volumenverhältnis von 1:1 dosierbare 2 Komponentenpolyurethan-Reaktivklebstoffmassen.

(57) Die erfindungsgemäßen Zweikomponenten-Polyurethan-Reaktivklebstoffmassen bestehen aus:

A) einer Polyisocyanatkomponente mit einem NCO-Gehalt von 10 bis 25 Gew.-%, einer Viskosität von maximal 2500 mPa.s (25 ° C) und einer mittleren Funktionalität von 2 bis 3,

B)

(i) wenigstens einem aliphatischen Diol mit einer OH-Zahl von >835 mg KOH/g,

(ii) wenigstens einem Polyol mit einer mittleren OH-Zahl von 20 bis 200 mg KOH/g und einer mittleren Funktionalität von 2 bis 4,

(iii) wenigstens einem aliphatischen oder aromatischen di- oder trifunktionellen Amin mit einem Molekulargewicht von maximal 300 g/Mol, wobei die mittlere OH-Zahl der Gesamtkomponente B) von 200 bis 290 mg KOH/g beträgt und die Diole, die Polyole und die Amine der Komponente B) sich nicht entmischen und die Viskosität der Komponente B) maximal 3000 mPa.s (25 ° C) beträgt sowie

C) 0,005 bis 2,0 Gew.-%, bezogen auf die gesamte Klebstoffmasse, für die Umsetzung von Komponente A) mit Komponente B) geeigneten Katalysatoren,

sind tropffrei über Kopf auftragbar, frei von anorganischen Füllstoffen und lassen sich ohne weiteres im Volumenverhältnis 1:1 dosieren.

EP 0 676 427 A2

Die Erfindung betrifft 2 Komponenten-Polyurethan-Reaktivklebstoffmassen, die tropffrei über Kopf auftragbar, frei von anorganischen Füllstoffen und im Volumenverhältnis von 1:1 dosierbar sind.

Bei vielseitigen Verwendungen von Polyurethansystemen, insbesondere von Klebstoffen, ist es erwünscht, daß die Systeme strukturviskoses oder thixotropes Verhalten zeigen, so daß sich nach dem Auftrag schnell eine hohe Viskosität einstellt und das Verlaufen oder Abtropfen der Klebstoffraupe (des Klebstoffauftrags) verhindert wird. Die Erfindung betrifft insbesondere spezielle Klebstoff-Zweikomponentensysteme vom Polyurethantyp, die bei Montagearbeiten im Baubereich sowie bei Reparaturarbeiten ohne Probleme angewendet werden können. Insbesondere für diese Einsatzgebiete ist es wünschenswert, daß das Klebstoffsystem nach dem Auftrag auf dem Substrat nicht fließfähig ist, weil häufig über Kopf oder in der Senkrechten gearbeitet werden muß. Es sind verschiedene Wege bekannt geworden, um diesem Sachverhalt gerecht zu werden. Zum Teil wurden bisher pastöse gefüllte Klebstoffe verwendet, die zusätzlich organische und/oder anorganische Verdickungsmittel enthalten, wobei bei den Zweikomponentensystemen meistens die Polyolkomponente gefüllt ist, insbesondere mit Füllstoffen zur physikalischen Thixotropierung. Dabei werden meist anorganische Stoffe wie Schichtsilikate verwendet. Aufgrund der Stöchiometrie und Dichteverhältnisse ist es jedoch schwierig, auf diese Weise 1:1 volumendosierbare Systeme zu erzeugen. So ist die Füllung der Polyisocyanatkomponente mit anorganischen oder organischen Füllstoffen schwierig, da diese aufwendig von enthaltenem Wasser befreit werden müssen. Wenn auch derartige, pastöse, physikalisch thixotropierte Klebstoffsysteme nicht fließen, ist dieses zwar bei der eigentlichen Montage, jedoch nicht bei der Aufbringung des Klebstoffes auf das Substrat erwünscht. Zum einen wird die Auftragbarkeit erschwert oder gar unmöglich gemacht und zum anderen verlaufen diese Klebstoffe auf der Substratoberfläche nicht. Deshalb wird möglicherweise eine nicht hinreichende Benetzung erhalten. Darüber hinaus ist die Vermischung einer solchen gefüllten Polyolkomponente mit der Isocyanatkomponente unmittelbar vor der Aufbringung des Klebstoffs wesentlich erschwert.

Es sind daher andere Systeme bekannt geworden, in denen Amine zur Bewirkung eines "non sagging"-Verhaltens, d.h. zur Einstellung einer verlaufsstabilen Klebstoffraupe (Klebstoffstreifens) zugesetzt werden. Speziell die Verwendung von Aminen zur Bewirkung des "non-sagging"-Charakters von Klebstoffen wird beschrieben in US 3 979 364, 4 336 298 und 4 444 976 sowie EP-A-63 534.

US-A 3 714 127 beschreibt Zweikomponenten-Polyurethanklebstoffe auf Basis eines Isocyanatprepolymeren, dem zum Zwecke der Viskositätserhöhung und zur Gewährleistung eines "non-sagging"-Verhaltens ein Amin zugesetzt wird. EP-A-0 068 209 beschreibt einen Zweikomponenten-Polyurethanklebstoff mit einer Polyolkomponente, welche ein Polyester- oder ein Polyethertriol, ein Phenylendiamin oder ein Zinnkatalysator enthält. Diese Mischung wird mit einem aromatischen Diisocyanat zur Reaktion gebracht. EP-A-248 254 beschreibt einen Zweikomponenten-Polyurethanklebstoff, der das Reaktionsprodukt ist aus einem hydroxylfunktionellen Material, einem Di- oder Triamin und einem organischen Isocyanat. Die so hergestellten Klebstoffe zeichnen sich durch hervorragende Eigenschaften aus, jedoch befriedigen sie noch nicht alle Ansprüche hinsichtlich der Lagerstabilität der Polyolkomponente. Die EP-0 481 319 beschreibt einen Zweikomponenten-Polyurethanklebstoff, der das Reaktionsprodukt ist aus einem hydroxylfunktionellen Material enthaltend einen wenigstens eine C-C-Doppelbindung oder eine C-C-Dreifachbindung enthaltenden, niedermolekularen Kettenverlängerer, ein Di- oder Triamin und ein organisches Polyisocyanat. Die so hergestellten Klebstoffe zeichnen sich durch gute klebtechnische Eigenschaften sowie gute Lagerstabilität aus. Es findet sich jedoch kein Hinweis auf im Verhältnis von 1:1 volumendosierbare Abmischungen. In den Beispielen wird stets auf Roh-MDI als Polyisocyanatkomponente zurückgegriffen. Dieses weist einen NCO-Gehalt von ca. 30,4 % auf.

In der DE 40 23 005 werden thixotrope Polyurethansysteme beschrieben, die auf Polyolkomponenten zurückgreifen, welche eine Mischung von Polyamidaminen und niedermolekularen, mehrfunktionellen, insbesondere aromatischen Aminen, enthalten. Die Beeinflussung des Verlaufsverhaltens der Klebstoffraupe durch die Zusätze wird erwähnt.

Es wird angeführt, daß sich bei alleiniger Verwendung von niedermolekularen, mehrfunktionellem Amin in der Polyolkomponente keine ausreichende Lagerstabilität und keine ausreichende Thixotropierung einstellt. Es findet sich kein Hinweis, auf welche Art und Weise die innige Vermengung von Polyolkomponente samt Zusätzen mit der Isocyanatkomponente unmittelbar vor der Applikation durchzuführen ist. Es werden Abmischungen von Polyol- und Polyisocyanatkomponenten im Gewichtsverhältnis von etwa 2:1 bis 4:1 beschrieben. Es findet sich kein Hinweis auf Komponenten, die im Volumenverhältnis von 1:1 dosierbar sind.

Aufgabe der vorliegenden Erfindung ist es also, 2 Komponenten-Polyurethan-Reaktivklebstoffmassen zur Verfügung zu stellen, die tropffrei über Kopf auftragbar, frei von anorganischen Füllstoffen und im Volumenverhältnis von 1:1 dosierbar sind. Die erfindungsgemäßen Klebstoffmassen sollen darüber hinaus noch eine gute Lagerstabilität aufweisen.

Gegenstand der vorliegenden Erfindung sind daher 2 Komponenten-Polyurethan-Klebstoffmassen, die tropffrei über Kopf auftragbar, frei von anorganischen Füllstoffen, gut lagerbar und im Volumenverhältnis von 1:1 dosierbar sind, bestehend aus

A) einer Polyisocyanatkomponente mit einem NCO-Gehalt von 10 bis 25 Gew.-%, einer Viskosität von maximal 2500 mPa.s (25 °C) und einer mittleren Funktionalität von 2 bis 3,

B)

(i) wenigstens einem aliphatischen Diol mit einer OH-Zahl von >835 mg KOH/g,

(ii) wenigstens einem Polyol mit einer mittleren OH-Zahl von 20 bis 200 mg KOH/g und einer mittleren Funktionalität von 2 bis 4,

(iii) wenigstens einem aliphatischen oder aromatischen di- oder trifunktionellen Amin mit einem Molekulargewicht von maximal 300 g/Mol, wobei die mittlere OH-Zahl der Gesamtkomponente B) von 200 bis 290 mg KOH/g beträgt und die Diole, die Polyole und die Amine der Komponente B) sich nicht entmischen und die Viskosität der Komponente B) maximal 3000 mPa.s (25 °C) beträgt sowie

C) 0,005 bis 2,0 Gew.-%, bezogen auf die gesamte Klebstoffmasse, für die Umsetzung von Komponente A) mit Komponente B) geeigneten Katalysatoren.

Als Polyisocyanate der Komponente A) der erfindungsgemäßen Klebstoffmassen kommen bevorzugt solche in Frage, die aus der Polyurethanchemie bekannt und dort üblicherweise eingesetzt werden. Es handelt sich dabei insbesondere um Polyisocyanate auf aromatischer Basis, z.B. 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den bei der nachstehend beschriebenen Komponente B) beispielhaft genannten, einfachen Polyolen und/oder Polyetherpolyolen und/oder Polyesterpolyolen andererseits sowie beliebige Gemische derartiger Isocyanate, sofern sie ausreichend lagerstabil sind.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10 000, vorzugsweise 600 bis 8000 und insbesondere 800 bis 5000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599, vorzugsweise 62 bis 200 wie z.B. Ethylenglykol, Trimethylolpropan, Propandiol-1,2 oder Butandiol-1,4, oder Butandiol-2,3. insbesondere jedoch höhermolekulare Polyetherpolyole und/oder Polyesterpolyole der aus der Polyurethanchemie an sich bekannten Art mit Molekulargewichten von 600 bis 8000, vorzugsweise 800 bis 4000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.-% auf. Hieraus geht bereit hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Die Polyisocyanatkomponente A) der erfindungsgemäßen Klebstoffmassen besitzt eine Viskosität von maximal 2500 mPa.s (25 °C), bevorzugt 1000 bis 1800 mPas und eine mittlere Funktionalität von 2 bis 3, bevorzugt 2,3 bis 2,7.

Zur Einstellung eines bestimmten NCO-Gehalts der Komponente A) kann es sinnvoll sein, Anteile von Roh-MDI mit einem NCO-Prepolymeren abzumischen. Die im Roh-MDI enthaltenen Anteile an höherfunktionellem Material (Funktionalität >4) können ohne weiteres toleriert werden, sofern die mittlere Funktionalität von 3 bei der Komponente A) nicht überschritten wird.

Als aliphatische Diole mit einer OH-Zahl von >835 mg KOH/g (Komponente B) (i)) kommen die in der Polyurethanchemie üblichen Kettenverlängerer in Betracht, wie Ethylenglykol, Diethylenglykol, Propylenglykol, Dipropylenglykol, Butandiol-1,4, Propandiol-1,3. Bevorzugt sind Diole, die eine verbesserte Verträglichkeit mit den Polyolen (ii) der Komponente B) aufweisen. Genannt werden z.B. 2-Butendiol-1,4, Butandiol-1,3, Butandiol-2,3, 2-Butindiol-1,4, 2-Methyl-propandiol-1,3. Selbstverständlich ist es auch möglich die aliphatischen Diole im Gemisch untereinander einzusetzen.

Als Komponente B) (ii) eignen sich Polyole mit einer mittleren OH-Zahl von 20 bis 200 mg KOH/g und einer mittleren Funktionalität von 2 bis 4. Bevorzugt sind solche mit einer mittleren OH-Zahl von 28 bis 165 mg KOH/g und einer mittleren Funktionalität von 2,7 bis 3. Solche Polyole stellen beispielsweise Polyhydroxypolyether dar, die aus der Polyurethanchemie bekannt sind und die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren: Ammoniak oder Amine, wie Ethylendiamin, Hexamethylendiamin, 2,4-Diaminotoluol, Anilin oder Aminoalkohole oder Phenole wie Bisphenol A. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung niedermolekularer Alkohole mit mehrwertigen Carbonsäuren, wie Adipinsäure, Phthalsäure, Hexahydrophthalsäure, Tetrahydrophthalsäure oder den Anhydriden dieser Säuren in an sich bekannter Weise zugänglich sind, sofern die Viskosität der Komponente B nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. vom Aldehyd-Keton-Harzen, erhalten werden können, sowie Modifikationen von Rizinusöl und Polyole auf Basis anderer natürlicher Öle geeignet. Zubereitungen von Rizinusöl mit Aldehyd-Keton-Harzen sind besonders bevorzugt, da die Stabilität der Komponente B gegen Entmischung verbessert werden kann.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 280 142, sowie DE-A-2 324 134, 2 423 984, 2 512 385, 2 513 815, 2 550 796, 2 550 797, 2 550 833, 2 550 882, 2 633 293 und 2 639 254 beschrieben. Es ist aber auch möglich gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente B) geeignet. Bei Verwendung von Polyetherpolyolen, welche gemäß DE-A-2 442 101, 2 844 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit.

Vertreter der genannten erfindungsgemäß als Verbindungen B) (ii) zu verwendenden Verbindungen sind z.B. in High Polymers, Vol. XVI, "Polyurethanes, Chemistry and Technology", verfaßt von Saunders-Frisch, Interscience Publishers, New York, London, Band 1, 1982, Seiten 32-42 und Seiten 44-54 und Band II, 1984, Seiten 5-6 und 198-199, sowie im Kunststoff-Handbuch, Band VII, Carl Hanser Verlag, München, 1983, z.B. auf den Seiten 45-61, beschrieben.

Selbstverständlich können auch Gemische der aufgezählten Verbindungen eingesetzt werden.

Die Begrenzung der mittleren OH-Zahl und mittleren Funktionalität der Komponente B) (ii) ergibt sich insbesondere aus der zunehmenden Versprödung des resultierenden Polyurethans. Grundsätzlich sind dem Fachmann aber die Einflußmöglichkeiten auf die polymer-physikalischen Eigenschaften des Polyurethans bekannt, so daß NCO-Komponente A), Diol B) (i) und Polyol B) (ii) in günstiger Weise aufeinander abgestimmt werden können.

Als aliphatische oder aromatische di- oder trifunktionelle Amine (Komponente B (iii)) kommen bevorzugt solche in Frage die ein Molekulargewicht von maximal 300, insbesondere 60 bis 300 aufweisen.

Besonders bevorzugt sind dabei Diamine wie 1,4-Diaminobenzol, 2,4-Diaminotoluol, 2,4'- und/oder 4,4'-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu

der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Ganz besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Die erfindungsgemäßen 2 Komponenten-Polyurethan-Reaktivklebstoffmassen enthalten die in der Polyurethanchemie üblichen Katalysatoren für die Umsetzung von Polyolen mit Polyisocyanaten, und gegebenenfalls weitere Hilfs- und Zusatzstoffe. Dazu gehören insbesondere basische Stickstoff-Verbindungen sowie Lewis-Säure-Katalysatoren und auch Insertions-Katalysatoren (vgl. z.B. Kunststoff Handbuch Bd. VII, Carl Hanser Verlag, München, 1983, z.B. auf den Seiten 92 bis 99. Als bevorzugte Katalysatoren werden genannt:

Zinn enthaltende Verbindungen wie Dibutylzinndilaurat, Wismuth enthaltende Verbindungen wie Wismuthtrisneodekanoat, tertiäre Amine wie N,N-Dimethyl-benzylamin. Besonders bevorzugt sind N-acylierte Amine, wie der Katalysator mit der folgenden Struktur:

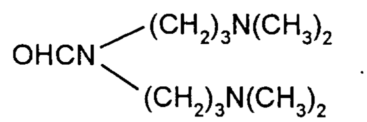

Die Katalysatoren werden üblicherweise in Mengen von 0,0005 bis 2 Gew.-%, bevorzugt 0,01 bis 0,5 Gew.-%, bezogen auf die gesamte Klebstoffmasse, zugegeben.

Als Hilfsstoffe können beispielsweise Farbstoffe, Zeolithe, Trockenmittel, Pigmente, Alterungsschutzmittel und Haftvermittler eingesetzt werden, wie sie aus der Polyurethanchemie bekannt sind (siehe beispielsweise Kunststoff Handbuch, Bd. VII, Carl Hanser Verlag, München, 1983, z.B. auf den Seiten 107 bis 109). Die Hilfsstoffe werden in den üblichen Mengen eingesetzt, beispielsweise in Mengen von 2 bis 8 Gew.-%, bezogen auf die gesamte Klebstoffmasse.

Die erfindungsgemäßen 2 Komponenten-Polyurethan-Reaktivklebstoffmassen eignen sich insbesondere zum Verkleben von Kunststoffen, Metallen, Holz, Stein und Glas.

Die Anwendung der erfindungsgemäßen 2 Komponenten-Polyurethan-Klebstoffmassen erfolgt vorzugsweise durch kontinuierliches Mischen der beiden Komponenten A) und B) entweder in einem Rührmischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich. Die Mengenverhältnisse von Isocyanat- zu Polyolkomponenten folgen den allgemein in der Isocyanatchemie geltenden Prinzipien; es wird mit geringfügigem Isocyanatüberschuß gearbeitet (Kennzahlbereich: 100 bis 125, bevorzugt 105 bis 118).

Besonders bevorzugt ist die Verarbeitung der Einzelkomponenten in einem handelsüblichen Doppelkartuschengerät, wobei die Kartuschen mit einem Volumenverhältnis von 1:1 vorliegen.

Der Gegenstand der vorliegenden Erfindung soll anhand der folgenden Beispiele näher erläutert werden (Prozentangaben beziehen sich, soweit nicht anders vermerkt, auf Gew.-%).

## Beispiele

Allgemeines:

I) Katalysator: Kat 1 = tert.-Aminkatalysator der Struktur:

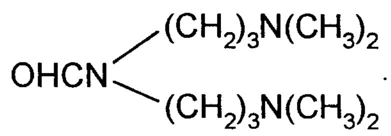

II) Zeolith-Paste:
Eine 50 %ige Zeolith-Suspension in Rizinusöl
III) H12-MDA: aliphatisches Diamin der Struktur:

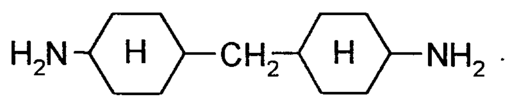

IV) IPDA: aliphatisches Diamin der Struktur:

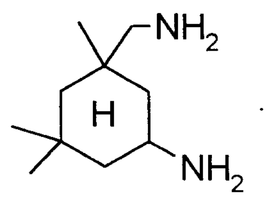

V) Roh-MDI: 4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt 31 %, Viskosität bei 25°C: etwa 180 mPa.s
VI) Prepolymer 1: Prepolymer auf Basis Diphenylmethandiisocyanat mit einem Anteil von 50 % des 2,4'-Isomeren und einem Gemisch aus di- und tetrafunktionellem Polyetherpolyol, NCO-Gehalt 15,5 %, Viskosität bei 25°C ca. 1600 mPa.s
VII) Kettenverlängerer:

- cis-BD = 2 cis-Butendiol-1,4
- M-PD = 3-Methylpropandiol-1,3
- BD-1,3 = Butandiol-1,3

VIII) Polyole:

- A: trifunktionelles Polyetherpolyol: 87 % Propylenoxid, 13 % Ethylenoxid-Endgruppen, $M_n$ ca. 4800 g/Mol, OH-Zahl: 35 mg KOH/g.
- B: Rizinusöl mit einem gelösten Zusatz von 20 Gew.-% eines Hydroxylgruppen aufweisenden Harzes, das durch Kondensation von Cyclopentanon mit Methanal gewonnen wurde (OH-Zahl: 165 mg KOH/g).
- C: Es wird ein Füllstoffpolyether hergestellt, wobei als kontinuierliche Phase 780 Gew.-Teile eines Polyetherpolyols der OH-Zahl 35 mg KOH/g hergestellt durch Propoxylierung von Trimethylolpropan und Ethoxylierung des Propoxylierungsproduktes (PO:EO-Verhältnis = 83:17), eingesetzt werden.
  Durch die radikalische in situ Polymerisation von 120 Gew.-Teilen eines Gemisches aus Acrylnitril und Styrol im Gewichtsverhältnis von 60 zu 40 im Polyether resultiert ein Polyether mit einem Gehalt an nicht sedimentierenden, organischem Füllstoff von 20 Gew.-% und einer Hydroxylzahl von 28 mg KOH/g.
- F: Rizinusöl (OH-Zahl ca. 160 mg KOH/g).

<u>Mechanische Prüfung der Klebstoffmassen:</u>

Für die Prüfung der Zugscherfestigkeiten in Anlehnung an DIN 53 283 wurden einschnittig-überlappende Verbindungen aus dem zu verklebenden Kunststoffmaterial hergestellt. Die Klebfugendicke betrug 0,8 mm, die Prüfkörperbreite 20 mm. Die Prüfkörperstärke bei SMC: 4 mm. Stärke des Stahlblechs: ca. 1,5 mm, des Aluminiums (blank sowie matt) ca. 1,5 mm. Die Überlappungslänge war 10 mm (SMC, Stahlblech) bzw. 20 mm (Aluminium). Die Zugscherfestigkeit wird als Mittelwert von 5 Proben angegeben. Die Fügeteile

wurden außer einer Entfettung keiner besonderen Vorbehandlung unterzogen.

Nach dem Fügeprozeß wurden die Prüfkörperverbunde zwei bis drei Tage bei Raumtemperatur gelagert und dann bei Raumtemperatur zerrissen.

Für die Ermittlung des Abtropf-Verhaltens sowie der Klebtechnischen Eigenschaften wurde ein Doppelkartuschen-Gerät der Fa. W.A. Keller Prozeßtechnik (CH-Rotkreuz) mit einem Statikmischer von ca. 12 cm Länge mit 20 Mischelementen zur Mischung und manuellen Dosierung der Klebstoffe eingesetzt.

**Tabelle 1**: Ergebnisse der mechanischen Prüfung bei verschiedenen Klebstoffmassen

| Bsp. Nr. | Polyolabmischung B | | | | | Viskosität Polyol-Mschg. B ca. (mPa.s) | Verhältnis Prep. 1/Roh-MDI | | Materialtyp Zugscherfestigkeit ($N/mm^2$) Überlappungslänge | | | | Überkopf auftragbar | |
|---|---|---|---|---|---|---|---|---|---|---|---|---|---|---|
| | i Kettenverlängerer (Tl.) | ii Polyol (Tl.) | iii Amin (Tl.) | Kat. (Tl.) | Trockenmittel (Tl.) | | 3:1 (Tl.) | 10:5,6 (Tl.) | Stahl 10 mm | SMC 10 mm | Alu. blank 20 mm | Alu matt 20 mm | ja | nein |
| 1 | 25,0 cis - BD 1,4 | 22,7 A<br>100,0 C | 1,1 IPDA<br>2,5 H12-MDA | 0,05 Kat. 1 | 11,6 Zeolith-Paste | 1580 | X | | - | 6,75 | 3,02 | 5,91 | X | |
| 2 | 25,0 cis - BD 1,4 | 100,0 C | 2,5 H12-MDA | 0,2 Kat. 1 | 6,0 Zeolith-Paste | | | X | 10,0 | - | 4,51 | 8,78 | X | |
| 3 | 11,0 cis - BD 1,4 | 82,0 F | 4,0 H12-MDA | 0,3 Kat. 1 | 5,0 Zeolith-Paste | | | X | - | - | - | 6,93 | X | |
| 4 | 10,0 cis - BD 1,4 | 81 F | 4,5 H12-MDA | 0,2 Kat. 1 | 5,0 Zeolith-Paste | 650 | | X | - | - | - | 9,07 | X | |
| 5 | 11,0 cis - BD 1,4 | 84 B | 4,5 H12-MDA | 0,2 Kat. 1 | - | | | X | - | - | - | 8,08 | X | |
| 6 | 25,0 M-PD 1,3 | 100,0 C | 2,5 H12-MDA | 0,2 Kat. 1 | 6,0 Zeolith-Paste | | | X | - | - | - | 9,05 | X | |
| 7 | 11,0 cis - BD 1,4 | 80,0 B | 4,5 H12-MDA | 0,2 Kat. 1 | 6,0 Zeolith-Paste | | | X | - | - | 2,45 | 9,98 | X | |
| 8 | 11,0 cis - BD 1,4 | 80,0 B | 4,5 IPDA | 0,15 Kat. 1 | 6,0 Zeolith-Paste | 2550 | | X | - | - | 1,75 | - | X | |
| 9 | 11,0 BD-1,3 | 82,0 F | 4,5 H12-MDA | 0,30 Kat. 1 | 5,0 Zeolith-Paste | | | X | - | - | - | 9,51 | X | |

Aushärtung bei RT: 2 bis 3 Tage

Die matten Aluminium-Prüfkörper verbiegen sich während des Reißvorgangs.

M-PD 1,3 = 2-Methylpropandiol- 1,3
cis BD-1,4 = cis-Butandiol-1,4
BD-1,3 = Butandiol-1,3.

Polyisocyanat-Mischung A:

Abmischung Prep. 1 (3 Gew.-Teile) zu Roh MDI (1 Gew.-Teil):
Viskosität (23 °C): ca. 1790 mPas.
Abmischung Prep. 1 (10 Gew.-Teile) zu Roh MDI (5,6 Gew.-Teile):
Viskosität (23 °C): ca. 1150 mPas.

## Patentansprüche

**1.** 2 Komponenten-Polyurethan-Reaktivklebstoffmassen, die tropffrei über Kopf auftragbar, frei von anorganischen Füllstoffen und im Volumenverhältnis 1:1 dosierbar sind, bestehend aus:

A) einem Polyisocyanat mit einem NCO-Gehalt von 10 bis 25 Gew.-%, einer Viskosität von maximal 2500 mPa.s (25 °C) und einer mittleren Funktionalität von 2 bis 3,

B)

(i) wenigstens einem aliphatischen Diol mit einer OH-Zahl von größer 835 mg KOH/g,

(ii) wenigstens einem Polyol mit einer mittleren OH-Zahl von 20 bis 200 mg KOH/g und einer mittleren Funktionalität von 2 bis 4,

(iii) wenigstens einem aliphatischen oder aromatischen di- oder trifunktionellen Amin mit einem Molekulargewicht von maximal 300 g/mol,

wobei die mittlere OH-Zahl der Gesamtkomponente B) von 200 bis 290 mg KOH/g beträgt und die Diole, die Polyole und die Amine der Komponente B) sich nicht entmischen und die Viskosität der Komponente B) maximal 3000 mPa.s (25 °C) beträgt sowie

C) 0,005 bis 2,0 Gew.-%, bezogen auf die gesamte Klebstoffmasse, für die Umsetzung von Komponente A) mit Komponente B) geeigneten Katalysatoren.